# EUROPÄISCHE PATENTSCHRIFT

(11) **EP 2 748 004 B1**
(45) Veröffentlichungstag und Bekanntmachung des Hinweises auf die Patenterteilung: **04.01.2017**
(21) Anmeldenummer: 12748224.8
(22) Anmeldetag: 17.08.2012
(51) Int. Cl.: B41F 33/00, B41F 33/02, G01J 3/02

(54) **MASCHINE UND VERFAHREN ZUM BEDRUCKEN VON MATERIALBAHNEN**
MACHINE AND METHOD FOR PRINTING WEBS OF MATERIAL
MACHINE ET PROCÉDÉ D'IMPRESSION DE BANDES D'IMPRESSION

(30) Priorität: 22.08.2011 DE 102011110796
(43) Veröffentlichungstag der Anmeldung: 02.07.2014
(73) Patentinhaber: Windmöller & Hölscher KG, 49525 Lengerich (DE)
(72) Erfinder: WEIDMANN, Björn, 49078 Osnabrück (DE)
(86) Internationale Anmeldenummer: PCT/EP2012/066084
(87) Internationale Veröffentlichungsnummer: WO 2013/026791

(56) Entgegenhaltungen:
- DE-A1-102007 025 910
- DE-B3-102004 007 374

## Beschreibung

Die Erfindung betrifft eine Maschine und ein Verfahren zum Bedrucken von Materialbahnen. Bedruckstoffe werden untersucht, um die Druckergebnisse zu kontrollieren. In der Regel wird zu diesem Zweck ein fertiges Druckerzeugnis entnommen und unter anderem auf seinen optischen Eindruck untersucht. In jüngerer Zeit werden bedruckte Materialbahnen verstärkt inline mit Sensoren wie Kameras beobachtet, um das Ergebnis des Druckprozesses zu überwachen und schneller zu einem Ergebnis zu kommen. Auch die DE 10 2004 007 374 B3 zeigt eine Vorrichtung zur Inline-Bahnbeobachtung. In dieser Druckschrift wird die zu untersuchende Bahn im Bereich der Bahnbeobachtungsstation von einer Gegenlage geführt. Hierbei ist die Gegenlage auf der dem Sensor abgewandten Seite der Bahn positioniert. Die Gegenlage weist eine poröse oder durchlöcherte Oberfläche auf, durch die Luft gedrückt wird. Als Folge dieser Maßnahme bildet sich ein Luftpolster, auf dem die Bahn gleitet.

Die Erfahrung hat gezeigt, dass es bei den gezeigten Inlinebahnbeobachtungsstationen zu Messfehlern kommt. Dies gilt insbesondere, wenn mit bildgebenden Sensoren - die in der Folge auch zweite Sensoren genannt werden - gemessen wird.

Daher besteht die Aufgabe der vorliegenden Erfindung darin, diese Messfehler zu reduzieren. Die Aufgabe wird durch die Ansprüche 1 und 10 gelöst.

Erfindungsgemäß ist nach diesen Ansprüchen vorgesehen, dass die der Materialbahn (4) zugewandte Oberfläche der Gegenlage einen Spiegel (34) und/oder eine Hintergrundbeleuchtung (39) aufweist

Das Vorsehen eines optisch aktiven Elements in der Gegenlage ermöglicht es, helle oder gar weiße Bildelemente auf transparentem Untergrund sichtbar zu machen. Mit einem Spiegel werden hierbei erstaunlich gute Ergebnisse erzielt. Es ist vorteilhaft, in einer Beobachtungsstation zusätzlich eine Walze, vorzugsweise eine weiße Walze vorzusehen, die die Rolle einer Gegenlage einnehmen kann. Die beiden Elemente - Walze und Gegenlage - können ergänzend oder alternativ gegen die Materialbahn angestellt werden. Von Vorteil ist auch die Ausleuchtung des Beobachtungsbereichs des Sensors mit weiteren Beleuchtungsvorrichtungen wie einer Hell- und Dunkelfeldbeleuchtung.

Als poröses Material empfiehlt sich in einer vorteilhaften Ausführungsform mikroporöses Teflon. Dieses Material kann in einem Sinterprozess hergestellt werden, es besitzt gute Notlaufeigenschaften und es ist sogar so stabil, dass es bei der Herstellung von Rohren aus diesem Material möglich ist, auf eine Stützkonstruktion zu verzichten.

Insbesondere, wenn es darum geht, inline Farbwerte zu messen, ist ein Luftpolster zwischen Gegenlage und Bedruckstoff eher hinderlich. Daher kann es bei Sensoren, die solche Messungen vornehmen sollen (in der Folge auch erste Sensoren genannt), vorteilhaft sein die Materialbahn zum Beispiel mit einer Luftströmung gegen eine Gegenlage zu drücken. Es kann Blasluft eingesetzt werden, um in Wirkzusammenhang mit porösem oder durchlöchertem Material ein Luftpolster zu erzeugen, auf dem die Bahn schwimmen kann.

Eine vorteilhafte alternative oder ergänzende Möglichkeit, ein solches Luftpolster zu vermeiden, besteht darin, die dem Sensor abgewandte Seite der Materialbahn mit Unterdruck zu beaufschlagen und so an die Gegenlage zu saugen. Zu diesem Zweck müsste die Gegenlage mit dementsprechenden Sauglöchern oder Ähnlichem versehen werden. Saug- oder Unterdruckvorrichtungen müssten ebenfalls vorgesehen werden. Zu den Nachteilen des Unterdrucks gehört, dass ein Verlaufen der Bahn natürlich zu einer völligen Öffnung der Unterdruckdüsen gegen die Atmosphäre führt, was einen raschen Verlust des Unterdrucks nach sich ziehen kann. Des Weiteren würden auch Formatwechsel bei der Bahn (Bahnbreitenwechsel) eine Anpassung der Unterdruckdüsen notwendig machen (Unterdruckdüsen müssten bei einer schmäleren Bahn geschlossen werden und umgekehrt). Sowohl die Verwendung von Unterdruck als auch die Verwendung von Blasluft führen zu einem Andruck der Bahn an die Gegenlage. Interessanterweise scheint die Bahn dem "Andruck" zunächst einen gewissen Widerstand entgegen zu setzen, der mit der Bahnlaufgeschwindigkeit steigt. Dieser Umstand dürfte mit der laminaren Luftströmung zu erklären sein, die von der Bahn bei ihrem Lauf mitgerissen wird. Ist dieser Widerstand erst einmal überwunden und unterschreitet die Bahn einen gewissen Abstand zur Gegenlage, so kommt der Bernoulli Effekt zwischen Bahn und Gegenlage zum Tragen und führt zu einem weiteren Anschmiegen zwischen Bahn und Gegenlage. Es ist möglich und in vielen Fällen vorteilhaft, den Abstand in den Bereich eines Millimeters oder noch darunter (>0,5 mm, >0,2 mm, eigentlich eher >0,1 mm oder >0,05 mm usw.) zu verringern oder gar ein völliges Anliegen der Bahn herbeizuführen.

Durch die Reduktion des Abstandes zwischen Bahn und Gegenlage wird die Qualität der Untersuchung des Bedruckstoffes verbessert. Dies gilt insbesondere für Messungen des Farbortes und Ähnliches. Solche Messungen werden vorteilhafterweise mit spektralfotometrisch messenden Sensoren vorgenommen.

Insbesondere in diesem Zusammenhang bieten eine ebene und/oder eine weiße Oberfläche der Gegenlage Vorteile.

Da es zu Reibung zwischen Bahn und Gegenlage kommen kann ist es von Vorteil, wenn die Fläche der Gegenlage, die in Berührung mit der Bahn kommen kann, nur einen Teil der Breite der Bahn besitzt. In diesem Fall ist es vorteilhaft, wenn die Gegenlage in dieser Richtung verfahrbar ist. Dies kann geschehen, indem die Gegenlage verfahrbar auf einem Schlitten auf einer Traverse angebracht wird.

Es ist vorteilhaft, in unmittelbarer Umgebung zum ersten Sensor und zur ersten Gegenlage zumindest einen zweiten Sensor vorzusehen. Mit diesem zumindest einen zweiten Sensor können auch andere Größen gemessen werden als mit dem ersten Sensor. Dies ist aus folgenden Gründen von großem Vorteil und führt zu einer weiteren Verbesserung auch der Qualität der Messungen mit dem zumindest einen ersten Sensor:
Der erste Sensor kann mit Hilfe des zweiten Sensors getriggert werden. Dies hat besondere Vorteile, wenn der zumindest eine erste Sensor ein spektralfotometrischer Sensor ist und der zumindest eine zweite Sensor ein bildgebender Sensor ist. Neben der Triggerung kann dann zum Beispiel auch eine Orientierung der ersten Sensoren in der x-z Ebene gehören. Der geringe Abstand zwischen den ersten und zweiten Sensoren verringert Ungenauigkeiten zum Beispiel durch eine sich verändernde Bahndehnung. Daher ist es vorteilhaft, wenn sich keine oder nur eine Leitwalze auf dem Bahnlaufweg zwischen den Messpunkten des zumindest einen ersten und des zumindest einen zweiten Sensors befinden.

Aufgrund der anderen Messgrößen, die mit dem zumindest einen zweiten Sensor gemessen werden sollen, kann der gewünschte Abstand zwischen der Bahn und der zweiten Gegenlage auch völlig anders sein als der zwischen Bahn und erster Gegenlage. So können hier wieder Luftpolster und Walzen vorteilhaft zum Einsatz kommen.

Die einzelnen Figuren zeigen:
- Fig. 1: Eine Station zur Beobachtung einer Materialbahn nach dem Stand der Technik
- Fig. 2: Ein Station mit einem ersten Sensor und einer ersten Gegenlage
- Fig. 3: Eine zweite Station zur Beobachtung einer Materialbahn nach dem Stand der Technik
- Fig. 4: Eine Station mit einem zweiten Sensor und einer zweiten Gegenlage
- Fig. 5: Eine weitere Station mit einem zweiten Sensor und einer zweiten Gegenlage
- Fig. 6: Die Station aus Figur 5 in einem anderen Betriebsmodus
- Fig. 7: Eine Schnittdarstellung einer zweiten Gegenlage
- Fig. 8: Eine Schnittdarstellung einer weiteren zweiten Gegenlage
- Fig. 9: Eine Station mit einem ersten und zweiten Sensor und einer ersten und zweiten Gegenlage

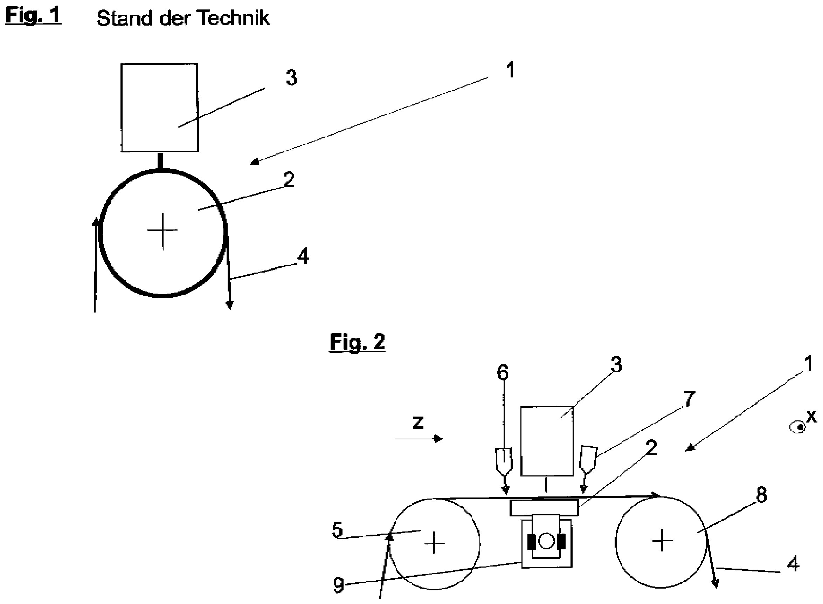

Fig. 1 zeigt eine Station 1 zur Beobachtung einer Materialbahn 4 nach dem Stand der Technik, bei der ein nicht transparentes Bahnmaterial auf einer schwarzen Gummiwalze, die als erste Gegenlage 2 dient, an einem ersten Sensor 3 vorbeigeführt wird. Bei transparenten Bahnmaterialien müssten eigentlich weiße Walzen verwendet werden. Diese sind jedoch teuer, sie verschmutzen leicht und sind daher nicht praxistauglich. Figur 2 zeigt eine Station 1 zur Beobachtung einer Materialbahn 4 in einer Maschine zum Bedrucken von Materialbahnen.

In dieser Station 1 läuft die Bahn erst über die mit einem nicht dargestellten Drehgeber versehene Geberwalze 5 in die Station 1 ein. Als nächstes gerät die Bahn in den Einfluss der Druckluftdüse 6, die Druckluft ausströmt, welche die Bahn 4 in Richtung auf die Gegenlage 2 drückt. Im Bereich dieser ersten Gegenlage 2 nimmt der erste Sensor 3 seine Messungen vor, hinter der Gegenlage 2 ist wieder ein Einwirkbereich einer Druckluftdüse nämlich der Druckluftdüse 7. Über die Leitwalze 8 verlässt die Bahn 4 diese Station 1. Die Gegenlage 2 kann kachelartig ausgeführt sein. Sie kann mit Hilfe einer Traverse 9 an die richtige Position in der x-Richtung der Bahn 4 (Breite) verfahren werden. Zudem ist der Austausch einer Kachel einfach und kostengünstig möglich. Eine automatische Verschmutzungsprüfung kann aufgrund der kleinen Fläche ebenfalls einfach und schnell erfolgen, da die Kachel aus dem Bereich des Bedrucksstoffs 4 gefahren und dort vermessen werden kann. Dies wäre mit einer Walze nicht möglich.

Bei der Vermessung von transmissiven bzw. transparenten Materialien spielt der Luftspalt zwischen Bedruckstoff und Messhintergrund für die Qualität des Messergebnisses eine entscheidende Rolle. Gleichzeitig soll ein permanenter Kontakt des Bedruckstoffs mit dem Hintergrund vermieden werden.

Aus diesem Grund sieht die Lösung vor, dass der Messhintergrund 2 knapp unter dem durch zwei Walzen 5, 8 geführten Bedruckstoff 4 liegt. Für die Messung wird dieser über Luftdruckdüsen 6, 7 gegen den Messhintergrund 2 geblasen. Die Düsen befinden sich in Bahnlaufrichtung z kurz vor und hinter dem Messhintergrund. Dadurch wird die mitgeführte Luft an den Messhintergrundkanten abgerakelt und der Luftspalt auf ein Minimum reduziert. Auf Grund des Bernoulli-Effekts saugt sich die Bahn bei zunehmender Geschwindigkeit immer besser an den Hintergrund an. Der Druck der Druckluft kann darüber hinaus an die Materialeigenschaften, Bahnspannung und Bahngeschwindigkeit angepasst werden. Nach Beendigung des Messvorgangs wird die Druckluft abgeschaltet, so dass sich die Bahn 4 wieder frei bewegt. Die Bahn 4 könnte auch über einen Unterdruck an den Messhintergrund 2 angesaugt werden. Diese Lösung führt jedoch bei Messungen am Bahnrand zu Problemen, da sich nur bedingt genügend Unterdruck zum Ansaugen der Bahn 4 bilden kann. Bei Verwendung von Druckluft spielt dies keine Rolle.

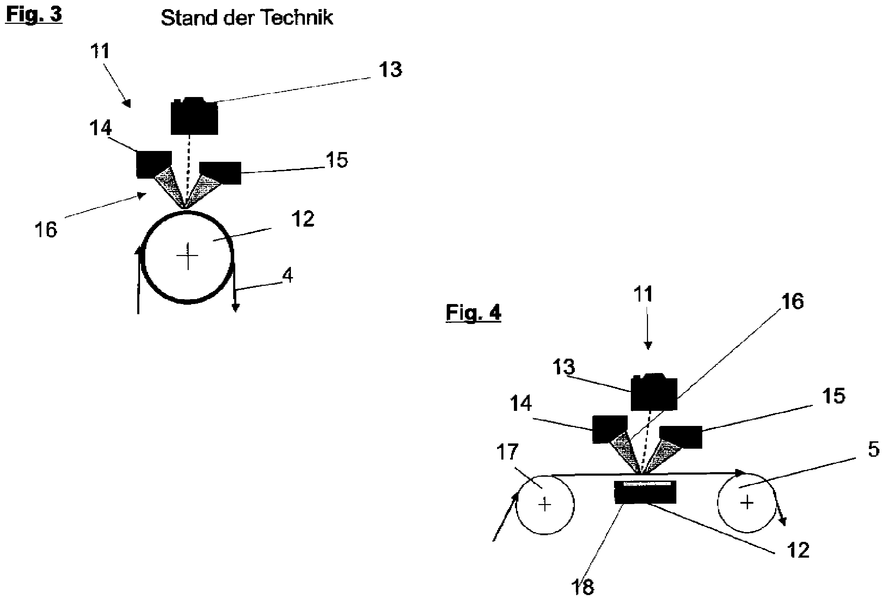

Figur 3 zeigt eine einfache zweite Station 11 zur Beobachtung einer Materialbahn, wie sie nach dem Stand der Technik teilweise für bildgebende Sensoren 13 eingesetzt wird. Der Bahnlauf ist wie in Figur 1. Als Messwalze wird hier eine Weiße Walze 12 (an die die Anforderungen nicht so hoch sind wie bei der Farbmessung) eingesetzt. Zu den Nachteilen eines solchen Verfahrens gehört, dass weiße Objekte auf transparenten Stoffen nicht erkannt werden können. Zu erwähnen sind die Hellfeld- 14 und die Dunkelfeldbeleuchtung 15, deren Lichtkegel 16 ebenfalls dargestellt werden.

Figur 4 zeigt eine zweite Station 11, bei der die Führung der Bahn 4 von der Leitwalze 17 und der Geberwalze 5 übernommen werden. Die Gegenlage 12 oder hier besser der Messhintergrund berührt hier die Bahn 4 nicht. Diese Gegenlage ist jedoch mit einer Hintergrundbeleuchtung 18 ausgestattet, so dass die Kamera 13 hier auch den "weißen Adler auf weißem Grund" erkennen kann.

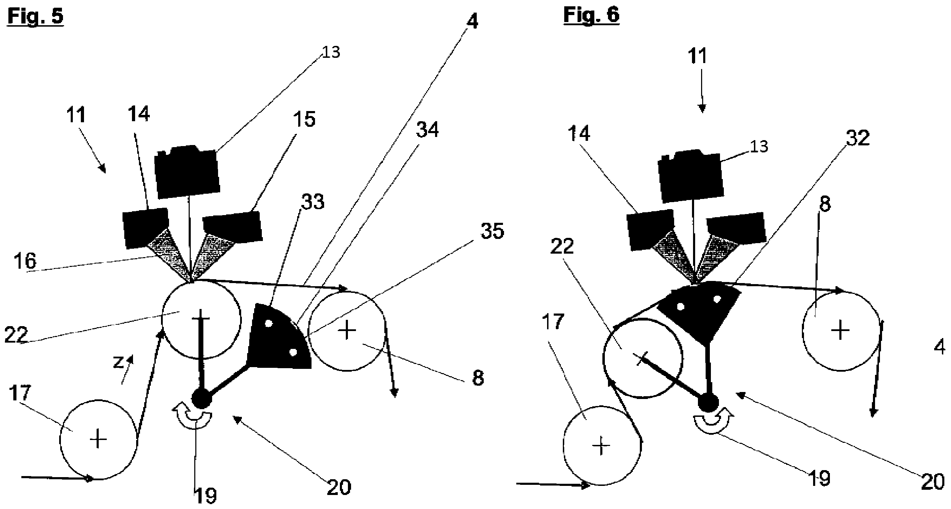

In den Figuren 5 und 6 wird eine weitere zweite Station 11 zur Beobachtung einer Materialbahn 4 dargestellt. Diese Station verfügt über ein Gegenlagensystem 20 mit zwei alternativen Gegenlagen 22 und 32. In Figur 5 dient eine weiße Walze 22 als Gegenlage beziehungsweise Messhintergrund. Durch den Pfeil 19 wird angedeutet, dass das System 20 im Rahmen einer Schwenkbewegung auch die Gegenlage 32 aktivieren kann, wie das in Figur 6 gezeigt ist. Hier dient die Walze 22 lediglich als Leitwalze, während die Gegenlage 32 die Bahn auf der dem Sensor gegenüberliegenden Seite führt.

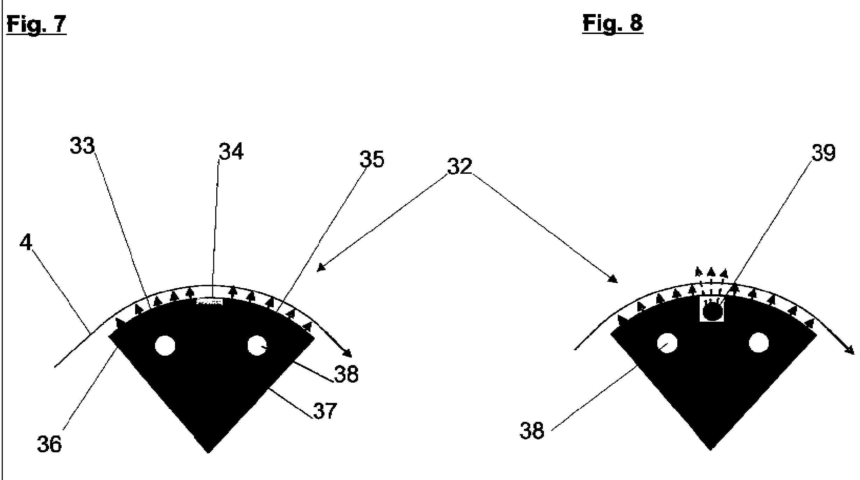

Die Figuren 7 und 8 zeigen zwei Ausführungsbeispiele für diese Gegenlage 32. Die der Bahn 4 zugewandte Oberfläche der Gegenlage 32 besitzt ein konvexes Profil. In der Bahnlaufrichtung z überstreicht die Bahn 4 zuerst die erste Oberfläche 33 der Gegenlage 32. Diese besteht aus einem porösen Material, vorzugsweise aus mikroporösem Teflon, das durch ein Sinterverfahren hergestellt werden kann. Dieses Material wird von einer Leitung 38 durchzogen, die Druckluft einbringt. Diese Druckluft durchströmt das poröse Material und tritt wie durch die Pfeile 36 dargestellt an der ersten Oberfläche 33 des porösen Materials aus. Hier bildet sich ein Luftpolster, das durch die Pfeile 36 dargestellt ist und auf dem die Bahn 4 schwimmt. In ihrer Transportrichtung z gelangt die Bahn dann in den Bereich des Spiegels 34, der eine Hintergrundbeleuchtung 18, 39 ersetzen kann. Die Maßnahme, einen Spiegel 34 als Messhintergrund zu verwenden, hat sich als derart vorteilhaft erwiesen, dass diese Maßnahme auch unabhängig von dem restlichen Aufbau der Messstation Vorteile bringt und schützenwert ist.

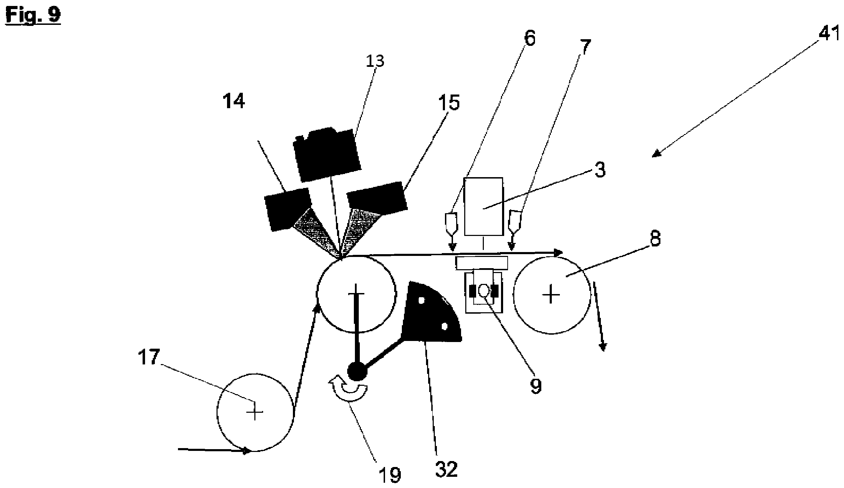

In der Transportrichtung z der Bahn ist dem Spiegel 34 die zweite Oberfläche 35 der Gegenlage 32 nachgelagert, die zu der ersten Oberfläche 33 der Gegenlage 32 spiegelbildlich aufgebaut ist. Die Gegenlage 32 verfügt über ein druckfestes Gehäuse 37 auf den der Bahn 4 abgewandten Seiten, das ein Ausströmen der Druckluft verhindert. Die Gegenlage 32 in Figur 8 verfügt an Stelle des Spiegels 34 über eine Hintergrundbeleuchtung 39 und ist ansonsten genauso aufgebaut wie die Gegenlage 32 in Figur 7. Die Figur 9 zeigt eine Station 41, welche die Funktionskomponenten der Station 11 aus Figur 5 mit den Funktionskomponenten der Station 1 aus Figur 2 miteinander vereint.

Wie bereits erwähnt bringt diese Anordnung in einer Station weitere Vorteile für die Güte der Messung mit sich. Bei Mehrfarbendruckmaschinen ist es vorteilhaft, eine der gezeigten Stationen 1, 11, 41 nach dem letzten Druckwerk vorzusehen. Der Einsatz der Blasluftdüsen 6, 7 führt auch zu einer Reinigung der Bahn 4 und der optischen Elemente der Bahnbeobachtungsstation.

| **Bezugszeichenliste** | |
|---|---|
| 1 | Erste Station zur Beobachtung einer Materialbahn |
| 2 | Erste Gegenlage/Messhintergrund |
| 3 | Erster Sensor |
| 4 | Materialbahn/Bahn |
| 5 | Geberwalze |
| 6 | Erste Druckluftdüse |
| 7 | Zweite Druckluftdüse |
| 8 | Leitwalze |
| 9 | Traverse |
| 10 | |
| 11 | Zweite Station zur Beobachtung einer Materialbahn |
| 12 | Zweite Gegenlage/Messhintergrund |
| 13 | Zweiter Sensor |
| 14 | Hellfeldbeleuchtung |
| 15 | Dunkelfeldbeleuchtung |
| 16 | Lichtkegel |
| 17 | Leitwalze |
| 18 | Hintergrundbeleuchtung |
| 19 | Pfeil in Schwenkrichtung der Gegenlagen 32 und 22 |
| 20 | Gegenlagensystem |
| 21 | |
| 22 | weiße Walze |
| 23 | |
| 24 | |
| | |
| 30 | |
| 31 | |
| 32 | Gegenlage |
| 33 | Erste Oberfläche der Gegenlage 32 |
| 34 | Spiegel |
| 35 | Zweite Oberfläche der Gegenlage 32 |
| 36 | Pfeile (Luftaustritt aus der Gegenlage 32) |
| 37 | Druckfestes Gehäuse der Gegenlage 32 |
| 38 | Druckluftkanal/Leitung |
| 39 | Hintergrundbeleuchtung der Gegenlage 32 |
| 40 | |
| 41 | Station zur Beobachtung einer Materialbahn |
| 42 | |
| 43 | |

## Patentansprüche

1. Maschine zum Bedrucken von Materialbahnen (4),
- welche eine Station (1, 11, 41) zur Beobachtung der bedruckten Materialbahn (4) aufweist,
- wobei die Station (1, 11, 41) zur Beobachtung der Materialbahn (4) einen Sensor zur Beobachtung der Materialbahn (4) und zumindest eine Gegenlage (2, 12, 32) zur Führung der Bahn (4) aufweist, wobei sich die zumindest eine Gegenlage (2, 12, 32) auf der dem Sensor (3, 13) abgewandten Seite der Bahn befindet,
- und wobei die der Materialbahn zugewandte Oberfläche der Gegenlage zumindest zum Teil aus einem porösem oder durchlöcherten Material besteht, welches von Druckluft durchströmt wird,
**dadurch gekennzeichnet, dass**
die der Materialbahn (4) zugewandte Oberfläche der Gegenlage einen Spiegel (34) und/oder eine Hintergrundbeleuchtung (18, 39) aufweist.

2. Maschine nach Anspruch 1,
**dadurch gekennzeichnet, dass**
die der Materialbahn (4) zugewandte Oberfläche der Gegenlage (2, 12, 32) zumindest zum Teil aus mikroporösem Teflon besteht.

3. Maschine nach einem der vorstehenden Ansprüche,
**dadurch gekennzeichnet, dass**
die Station (1, 11, 41) zusätzlich zu der Gegenlage (2, 12, 32) mit einer weißen Walze (22) ausgestattet ist, mit der die Materialbahn (4) im Arbeitsbereich des Sensors führbar ist.

4. Maschine nach dem vorstehenden Anspruch,
**dadurch gekennzeichnet, dass**
die Materialbahn mit der weißen Walze (22) und der Gegenlage (32) alternativ im Arbeitsbereich des Sensors (3, 13) führbar ist.

5. Maschine nach dem vorstehenden Anspruch,
**dadurch gekennzeichnet, dass**
die weiße Walze (22) von der Materialbahn (4) abstellbar ist.

6. Maschine nach einem der vorstehenden Ansprüche,
**dadurch gekennzeichnet, dass**
die Gegenlage (32) im Verhältnis zur Materialbahn (4) still steht.

7. Maschine nach dem vorstehenden Anspruch,
**dadurch gekennzeichnet, dass**
die der Materialbahn (4) zugewandte Oberfläche der stillstehenden Gegenlage (32) in der Bahnlaufrichtung (z) vor und/oder nach dem Spiegel (34) und/oder der Hintergrundbeleuchtung (39) aus einem porösen oder durchlöcherten Material besteht.

8. Maschine nach einem der vorstehenden Ansprüche,
**gekennzeichnet durch**
zumindest zwei weitere Beleuchtungsvorrichtungen (14, 15) **durch** welche der Beobachtungsbereich des Sensors (3, 13) von der dem Sensor zugewandten Seite aus beleuchtbar ist.

9. Maschine nach einem der vorstehenden Ansprüche,
**dadurch gekennzeichnet, dass**
die der Materialbahn (4) zugewandte Oberfläche der Gegenlage (32) in ihrem Querschnitt konvex ausgebildet ist.

10. Verfahren zum Bedrucken von Materialbahnen (4),
- bei dem die Materialbahn (4) durch eine Station (1, 11, 41) zur Beobachtung der bedruckten Materialbahn (4) geführt wird,
- in der (1, 11, 41) die Materialbahn (4) mit einem Sensor zur Beobachtung der Materialbahn (4) beobachtet wird, während die Materialbahn (4) durch zumindest eine Gegenlage (2, 12, 32) zur Führung der Bahn (4) geführt wird,
wobei sich die zumindest eine Gegenlage auf der dem Sensor (3, 13) abgewandten Seite der Materialbahn (4) befindet,
- und wobei die der Materialbahn (4) zugewandte Oberfläche der Gegenlage (2, 12, 32) zumindest zum Teil aus einem porösem oder durchlöcherten Material besteht, welches von Druckluft durchströmt wird,
**dadurch gekennzeichnet, dass**
die der Materialbahn (4) zugewandte Oberfläche der Gegenlage einen Spiegel (34) und/oder eine Hintergrundbeleuchtung (18, 39) aufweist, wobei die Materialbahn (4) an dem Spiegel und/oder der Hintergrundbeleuchtung vorbeigeführt wird, während der Sensor (3, 13) die Materialbahn (4) beobachtet.

## Claims

1. Machine for printing material webs (4),
- which machine has a station (1, 11, 41) for observing the printed material web (4),
- the station (1, 11, 41) for observing the material web (4) having a sensor for observing the material web (4) and at least one support (2, 12, 32) for guiding the web (4), the at least one support (2, 12, 32) being situated on that side of the web which faces away from the sensor (3, 13),
- and that surface of the support which faces the material web consisting at least partially of a porous or perforated material which is flowed through by compressed air,
**characterized in that** that surface of the support which faces the material web (4) has a mirror (34) and/or a backlight (18, 39).

2. Machine according to Claim 1, **characterized in that** that surface of the support (2, 12, 32) which faces the material web (4) consists at least partially of microporous Teflon.

3. Machine according to either of the preceding claims, **characterized in that**, in addition to the support (2, 12, 32), the station (1, 11, 41) is equipped with a white roll (22), by way of which the material web (4) can be guided in the operating region of the sensor.

4. Machine according to the preceding claim, **characterized in that** the material web can be guided in the operating region of the sensor (3, 13) alternately by way of the white roll (22) and the support (32).

5. Machine according to the preceding claim, **characterized in that** the white roll (22) can be set away from the material web (4).

6. Machine according to one of the preceding claims, **characterized in that** the support (32) is at a standstill in relation to the material web (4).

7. Machine according to the preceding claim, **characterized in that** that surface of the stationary support (32) which faces the material web (4) consists of a porous or perforated material in front of and/or behind the mirror (34) and/or the backlight (39) in the web running direction (z).

8. Machine according to one of the preceding claims, **characterized by** at least two further illumination apparatuses (14, 15), by way of which the observation region of the sensor (3, 13) can be illuminated from the side which faces the sensor.

9. Machine according to one of the preceding claims, **characterized in that** that surface of the support (32) which faces the material web (4) is of convex configuration in its cross section.

10. Method for printing material webs (4),
- in which method the material web (4) is guided through a station (1, 11, 41) for observing the printed material web (4),
- in which station (1, 11, 41) the material web (4) is observed by way of a sensor for observing the material web (4) while the material web (4) is guided by way of at least one support (2, 12, 32) for guiding the web (4),
the at least one support being situated on that side of the material web (4) which faces away from the sensor (3, 13),
- and that surface of the support (2, 12, 32) which faces the material web (4) consisting at least partially of a porous or perforated material which is flowed through by compressed air,
**characterized in that** that surface of the support which faces the material web (4) has a mirror (34) and/or a backlight (18, 39), the material web (4) being guided past the mirror and/or the backlight while the sensor (3, 13) observes the material web (4).

## Revendications

1. Machine d'impression de bandes de matériau (4),
- comportant une station (1, 11, 41) pour l'observation de la bande de matériau imprimé (4),
- dans laquelle la station (1, 11, 41) d'observation de la bande de matériau (4) comprend un capteur pour l'observation de la bande de matériau (4) et au moins un support complémentaire (2, 12, 32) pour guider la bande (4), dans laquelle l'au moins un support complémentaire (2, 12, 32) se trouve sur le côté de la bande qui est opposé au capteur (3, 13),
- et dans laquelle la surface du support complémentaire qui est tournée vers la bande de matériau est constituée au moins en partie d'un matériau poreux ou perforé qui est traversé par de l'air sous pression, **caractérisée en ce que** la surface du support complémentaire qui est tournée vers la bande de matériau (4) présente un miroir (34) et/ou un rétroéclairage (18, 39).

2. Machine selon la revendication 1,
**caractérisée en ce que** la surface du support complémentaire (2, 12, 32) qui est tournée vers la bande de matériau (4) est constituée au moins en partie de Téflon microporeux.

3. Machine selon l'une quelconque des revendications précédentes,
**caractérisée en ce que** la station (1, 11, 41) est munie, en plus du support complémentaire (2, 12, 32), d'un rouleau blanc (22) au moyen duquel la bande de matériau (4) peut être guidée dans la zone de fonctionnement du capteur.

4. Machine selon la revendication précédente,
**caractérisée en ce que** la bande de matériau peut être guidée alternativement dans la zone de fonctionnement du capteur (3, 13) à l'aide du rouleau blanc (22) et du support complémentaire (32).

5. Machine selon l'une quelconque des revendications précédentes,
**caractérisée en ce que** le rouleau blanc (22) peut être écarté de la bande de matériau (4).

6. Machine selon l'une quelconque des revendications précédentes,
**caractérisée en ce que** le support complémentaire (32) est immobile par rapport à la bande de matériau (4).

7. Machine selon l'une quelconque des revendications précédentes,
**caractérisée en ce que** la surface du support complémentaire (32) immobile qui est tournée vers la bande de matériau (4) dans la direction de déplacement (z) de la bande en amont et/ou en aval du miroir (34) et/ou du rétroéclairage (39) est constituée d'un matériau poreux ou perforé.

8. Machine selon l'une quelconque des revendications précédentes,
**caractérisée par** au moins deux autres dispositifs d'éclairage (14, 15) à l'aide desquels la zone d'observation du capteur (3, 13) peut être éclairée depuis le côté tourné vers le capteur.

9. Machine selon l'une quelconque des revendications précédentes,
**caractérisée en ce que** la surface du support complémentaire (32) qui est tournée vers la bande de matériau (4) est réalisée de manière à être convexe en section transversale.

10. Procédé pour l'impression de bandes de matériau (4),
- dans lequel la bande de matériau (4) est guidée à travers une station (1, 11, 41) pour l'observation de la bande de matériau imprimée (4),
- dans laquelle (1, 11, 41) la bande de matériau (4) est observée au moyen d'un capteur destiné à l'observation de la bande de matériau (4), pendant que la bande de matériau (4) est guidée par au moins un support complémentaire (2, 12, 32) destiné au guidage de la bande (4), dans lequel l'au moins un support complémentaire se trouve sur le côté de la bande de matériau (4) qui est opposé au capteur (3, 13),
- et dans lequel la surface du support complémentaire (2, 12, 32) qui est tournée vers la bande de matériau (4) est constituée au moins en partie d'un matériau poreux ou perforé qui est traversé par de l'air sous pression,
**caractérisé en ce que** la surface du support complémentaire qui est tournée vers la bande de matériau (4) présente un miroir (34) et/ou un rétroéclairage (18, 39), dans lequel la bande de matériau (4) passe devant le miroir et/ou le rétroéclairage pendant que le capteur (3, 13) observe la bande de matériau (4).
